**Europäisches Patentamt**

(19) **European Patent Office**

**Office européen des brevets**

(11) Veröffentlichungsnummer: **0 024 602**
**B1**

(12) **EUROPÄISCHE PATENTSCHRIFT**

(45) Veröffentlichungstag der Patentschrift:
**12.10.83**

(51) Int. Cl.³: **C 09 D 3/727,** D 21 H 1/28,
B 32 B 27/28

(21) Anmeldenummer: **80104683.0**

(22) Anmeldetag: **08.08.80**

(54) **Wässerige Dispersionen, deren Herstellung und ihre Verwendung zur Herstellung von Überzugsmassen.**

(30) Priorität: **21.08.79 DE 2933765**

(43) Veröffentlichungstag der Anmeldung:
**11.03.81 Patentblatt 81/10**

(45) Bekanntmachung des Hinweises auf die Patenterteilung:
**12.10.83 Patentblatt 83/41**

(84) Benannte Vertragsstaaten:
**AT BE CH DE FR GB IT LI NL SE**

(56) Entgegenhaltungen:
**DE-A-2 450 039**
**DE-B-2 442 704**
**GB-A-959 521**
**GB-A-1 500 513**

(73) Patentinhaber: **BAYER AG, Zentralbereich Patente, Marken und Lizenzen, D-5090 Leverkusen 1, Bayerwerk (DE)**

(72) Erfinder: **Goossens, John, Roggendorfstrasse 51, D-5000 Köln 80 (DE)**
Erfinder: **Wallpott, Gottfried, Gnadentaler Allee 14, D-4040 Neuss (DE)**
Erfinder: **Kranz, Dietmar, Dr., Jakob-Böhme-Strasse 17, D-5000 Köln 80 (DE)**
Erfinder: **Beck, Ulrich, Dr., Weiherstrasse 17, D-5303 Bornheim (DE)**

ACTORUM AG

Wässerige Dispersionen, deren Herstellung und ihre Verwendung zur Herstellung von Überzugsmassen

Die Erfindung betrifft wässrige Dispersionen, die a) Polymerisate in dispergierter Form (Polymerisat A) und b) wasserlösliche Polymerisate (Polymerisat B) in solchen Mengen enthalten, dass an das Polymere A mindestens 0,5 Gew.-% seines Eigengewichts an Polymerem B gebunden sind. Diese wässrigen Dispersionen eignen sich zur Herstellung verbesserter Überzugsmassen für flächige Substrate, insbesondere für gestrichene Druckträger.

Bei der Herstellung gestrichener Druckträger, insbesondere gestrichener Papiere, die zum Bedrucken geeignet sind, werden immer mehr die natürlichen Bindemittel, wie z.B. Casein und/oder Stärke teilweise oder vollständig durch synthetische Bindemittel auf Basis von Copolymeren aus Acrylsäureestern, Styrol, Butadien und ungesättigten Carbonsäuren, die in Form wässriger Dispersionen vorliegen, ersetzt. Bindemittel auf Basis von Naturprodukten haben die Nachteile, dass sie nicht immer in gleicher Qualität anfallen, oftmals eine störende Färbung haben, empfindlich gegen Befall von Mikroorganismen sind, durch aufwendige Verfahren aufgeschlossen werden müssen und hochviskose Lösungen bei geringem Feststoffgehalt liefern. Bindemittel auf Basis von synthetischen Hochpolymeren weisen diese Mängel nicht mehr auf und besitzen zusätzlich Vorteile.

Durch die ständig steigenden Anforderungen an die Qualität des bedruckten Papiers werden immer bessere Eigenschaften der Bindemittel gefordert. Verbesserungen in dieser Hinsicht erreicht man durch die Zugabe von sog. Co-Bindern, z.B. von Mischpolymerisaten aus Vinylacetat und Acrylamid [DE-A 2 450 039; G. Hirsch, Das Papier 32 (10 A), 1978, 66-72]. Man erreicht dabei jedoch nur eine Verbesserung von einzelnen Eigenschaften, nicht aber eine gleichzeitige Qualitätsverbesserung für die Mehrzahl der geforderten Eigenschaften.

Aus der DE-A 2 703 418 sind pigmenthaltige Papierstreichmassen bekannt, die ausser einem üblicherweise als Binder verwendeten synthetischen Latex auf Basis von Polyacrylaten, Polymethacrylaten, Styrol-Butadien-Polymerisaten oder Polymerisaten des Vinylacetats in Form von wässrigen Dispersionen als Co-Binder ein hochmolekulares, wasserlösliches Polymerisat enthalten. Wesentlich für diese Papierstreichmassen ist die Herstellung des wasserlöslichen Polymerisats durch Polymerisation in einer Wasser-in-Öl-Emulsion. Dadurch lassen sich das Viskositätsverhalten, das Wasserrückhaltevermögen und die Rupffestigkeit verbessern.

Jedoch bleibt es nach wie vor ein Problem, hohe Filmhärte bei gleichzeitig gutem Bindevermögen, geringe Neigung zur Migration in der Pigmentmatrix, besonders gute Faserabdeckung, gute Opazität und insbesondere bei LWC-Papieren (geringeres Flächengewicht) ein geringeres Wegschlagen der Druckfarbe in das Papier zu erreichen. Gerade in letzter Zeit steigt die Nachfrage nach Papieren mit geringem Flächengewicht deutlich an (Senkung der Rohstoff- und Versandkosten), so dass für diesen Bereich bei LWC- und Tiefdruckpapieren die Glätte des Striches, die Faserabdeckung, die Opazität und das Wegschlagverhalten der Druckfarbe von grösster technischer und wirtschaftlicher Bedeutung werden.

Diese Anforderungen können nicht erfüllt werden, wenn der wasserunlösliche Co-Binder gemäss DE-B 2 442 704 oder GB-A 1 500 513 erst zugegeben wird, wenn Binder und Pigment bereits miteinander vermischt sind.

Es wurde nun gefunden, dass verbesserte pigmenthaltige Papierstreichmassen, die den vorgenannten Anforderungen gerecht werden, hergestellt werden können mit Dispersionen, die neben einem bestimmten, als Binder geeigneten synthetischen Polymerisat als Co-Binder ein bestimmtes, relativ niedermolekulares wasserlösliches Polymerisat enthalten, das teilweise oder vollständig an das synthetische Polymerisat chemisch und/oder physikalisch gebunden ist. Dabei werden die in der Dispersion vorliegenden Teilchen des synthetischen Polymerisats teilweise oder vollständig von einer Hülle des wasserlöslichen Polymeren umgeben.

Gegenstand der Erfindung sind wässrige, pigmenthaltige Dispersionen mit einem Feststoffgehalt zwischen 35 und 65 Gew.-% von

a) als Binder dienenden, gegebenenfalls hydrophile Gruppen enthaltenden, Polymerisaten A, die 70 bis 100 Gew.-% einpolymerisierte Einheiten von Styrol/Butadien, Butadien/Acrylnitril, Ethylen/Vinylchlorid, Styrol/(Meth)acrylsäureester, Vinylacetat/Ethylen oder Vinylacetat/Vinylchlorid, 0 - 15 Gew.-% weitere Monomere und 0 - 15 Gew.-% ungesättigte Carbonsäuren, deren Amide und/oder andere hydrophile Monomere mit Sulfonsäure-, Amino- oder Hydroxylgruppen enthalten, und

b) als Co-Binder dienenden wasserlöslichen Polymerisaten B, dadurch gekennzeichnet, dass die wasserlöslichen Polymerisate B

1) aus Poly(meth)acrylamid, Polyvinylpyrrolidon, und /oder Copolymeren aus Vinylalkohol/Vinylacetat, Vinylpyrrolidon/Vinylacetat, (Meth)acrylamid/Styrol oder Ethylenoxid/Propylenoxid mit Molgewicht von 1000 bis 1 000 000 bestehen,

2) Polymerisat B in einer Menge von 0,5 - 50 Gew.-%, bezogen auf Polymerisat A, mit diesem gemischt wird, wobei

3) das Polymerisat B teilweise oder vollständig an das Polymerisat A gebunden wird und die Menge an gebundenem Polymerisat B mindestens 0,5 Gew.-% des Polymerisats A beträgt,

4) das nicht gebundene Polymerisat B 2 Gew.-% der Pigmentmasse nicht überschreitet und

5) Polymerisat B vor der Abmischung von Binder und Pigment zum Latex aus dem Polymerisat A zugegeben wird.

Als ungesättigte Carbonsäuren und deren Amide kommen z.B. Fumar-, Itacon-, Malein- und (Meth)acrylsäure und (Meth)acrylamid in Frage.

Bevorzugt bestehen die Polymerisate A aus Styrol/Butadien-Mischpolymerisaten mit 30 - 75 Gew.-%

Styrol, 17 - 60 Gew.-% Butadien und 1 bis 8 Gew.-% einer oder mehrerer ungesättigter Carbonsäuren.

In einer anderen bevorzugten Form bestehen die Polymerisate A der vorliegenden Erfindung aus Mischpolymerisaten mit 30 - 75 Gew.-% Styrol, 17 bis 69 Gew.-% eines $C_{1-12}$ Alkylesters der Acrylsäure und 1 - 8 Gew.-% ungesättigter Carbonsäuren.

In einer besonders bevorzugten Form bestehen die Polymerisate A der vorliegenden Erfindung aus Mischpolymerisaten mit 30 - 75 Gew.-% Styrol, 17 bis 69 Gew.-% Butylacrylat und 1 - 8 Gew.-% ungesättigter Carbonsäuren.

In einer weiteren bevorzugten Form bestehen die Polymerisate A der vorliegenden Erfindung aus 30 bis 75 Gew.-% Styrol, 17 - 69 Gew.-% Butadien und 1-8 Gew.-% ungesättigten Säureamiden.

Die wasserlöslichen Polymerisate B der vorliegenden Erfindung bestehen aus Poly(meth)acrylamid, Polyvinylpyrrolidon, und/oder Copolymeren aus Vinylalkohol/Vinylacetat, Vinylpyrrolidon/Vinylacetat, (Meth)acrylamid/Styrol oder Ethylenoxid/Propylenoxid, wobei die Molekulargewichte der wasserlöslichen Polymerisate zwischen 1000 und 1 000 000, vorzugsweise zwischen 5000 und 200 000 liegen.

Bevorzugt enthalten wässrige Dispersionen der vorliegenden Erfindung wasserlösliche Polymerisate B in einer Menge von 0,5 - 30 Gew.-%, besonders bevorzugt in einer Menge von 0,5 - 15 Gew.-%, bezogen auf das Polymerisat A.

Die Herstellung der wässrigen Dispersion der vorliegenden Erfindung erfolgt einfach dadurch, dass man eine wässrige Lösung des wasserlöslichen Polymerisats B herstellt und zu einer Polymerdispersion, die das Polymerisat A als dispergierte Phase enthält, zumischt.

Eine solche Mischung ist besonders geeignet als Bindemittel zur Herstellung von Überzugsmassen für Druckträger. Diese Überzugsmassen enthalten neben dem Bindemittel Pigmente und gegebenenfalls übliche Verdickungsmittel (wie Polyacrylat). Als Pigmente kommen vorwiegend mineralische Produkte in Betracht, es können aber teilweise oder auch vollständig organische Pigmente verwendet werden. Übliche Pigmente sind z.B. Clay-Sorten, Titandioxid, Calciumcarbonat, Calciumsulfat, Bariumsulfat, Blankfix, Satinweiss, Aluminiumhydroxid und Zinkpigmente, wie Zinkoxid und Zinksulfid.

Die Menge an wasserlöslichem Polymerisat B hängt ab von der Affinität zwischen wässrigem Polymerisat B und dem Polymerisat A und von der Teilchengrösse der Latex-Teilchen, die von dem Polymerisat A aufgebaut werden. Bevorzugt soll die Menge an wasserlöslichem Polymerisat B so bemessen sein, dass das nicht gebundene Polymerisat B 1 Gew.-% der Pigmentmasse nicht überschreitet.

Gegenüber bisher bekannten Systemen, bei denen ein Co-Binder zu einem Latex zugegeben wird, ist es für die Verbesserung der Eigenschaften von Überzugsmassen für Druckträger durch die wässrigen Dispersionen der vorliegenden Erfindung wesentlich, dass vor Abmischung von Binder und Pigment das wasserlösliche Polymerisat B zum Latex mit der dispersen Phase aus dem Polymerisat A zugegeben wird und das wasserlösliche Polymerisat B zum Teil oder vollständig an das Polymerisat A chemisch oder physikalisch gebunden ist. Die Verbesserung tritt überraschenderweise nicht ein, wenn das wasserlösliche Polymerisat B nicht an das Polymerisat A gebunden ist oder erst zur Mischung von Binder und Pigment oder aber zuerst zur Pigmentanschlämmung gegeben wird.

Die Bindung des wasserlöslichen Polymerisats B an das Polymerisat A eines Latex lässt sich dadurch prüfen, dass man eine Probe des Latex durch Zentrifugieren in eine erste Phase, die überwiegend aus Polymer (A + B) besteht und eine 2. Phase, das Serum, trennt und einen evtl. im Serum verbliebenen Anteil des wasserlöslichen Polymerisats B nachweist. Der Nachweis des wasserlöslichen Polymerisats B kann durch chemische oder spektroskopische Methoden erfolgen. Diese Methoden sind beschrieben z.B. für Copolymere aus Vinylalkohol und Vinylacetat in J. appl. Polym. Sci. 9 (1965), 2393 und für Polyacrylamid in Br. Polym. J. 7 (1975), 135.

Durch die wässrigen Dispersionen der vorliegenden Erfindung lassen sich die wichtigsten und meisten der geforderten Papierstreicheigenschaften gleichzeitig in einer Weise optimieren, die zu besseren Ergebnissen als bei bisherigen Co-Binder-Verfahren führen. Die erfindungsgemässen wässrigen Dispersionen werden bevorzugt zur Herstellung von Papierstreichmassen eingesetzt, doch sind andere Einsatzgebiete auch denkbar und möglich, wie z.B. die Herstellung von Überzugsmassen für andere Substrate wie Pappe, Karton, Textilien und Leder.

Die erfindungsgemässen Dispersionen ermöglichen sowohl die gleichzeitige Optimierung vieler Eigenschaften als auch die gezielte, hervorragende Optimierung spezieller Stricheigenschaften, wie Kompressibilität, Mikro-Porosität, Farbaufnahme, Glätte und Bindevermögen.

Durch Verwendung der wässrigen Dispersionen, d.h. der modifizierten Latices gemäss vorliegender Erfindung wird bei der Herstellung von Druckpapieren mit geringem Flächengewicht überraschend gefunden, dass der Latex nicht durch das Papier durchschlägt, dass die Faserabdeckung verbessert wird und sich eine homogene, gleichmässige Strichmatrix ausbildet. Dadurch werden die Opazität, der Weissgrad und die Glätte verbessert und eine gleichmässige und rasche Druckfarbenaufnahme bei gleichbleibendem bzw. verbessertem Bindevermögen erzielt. Der weitere Vorteil des erfindungsgemässen Binders besteht darin, dass irreversible Verdickungen vermieden werden, die bei der bisher üblichen Verwendung von z.B. Polyvinylalkohol in Streichfarben auftreten können.

Die erfindungsgemäss modifizierten Latices bewirken im Vergleich zum Stand der Technik voluminösere und gleichmässig mikroporösere Striche. Beim Offset-Druck bedingt dies eine rasche gleichmässige Farbannahme, die besondere Vorteile beim Mehrfarbendruck nass in nass bietet.

Für den Tiefdruck bewirken die erfindungsgemäss modifizierten Latices eine hohe Kompressibilität und Glätte des Striches bei verminderter Kalanderarbeit. Durch die beschriebene Strichstruktur wird eine hohe rasche Farbannahme und hoher Druckglanz erzielt.

Wie bei Offset-Papieren besteht auch beim Tiefdruck der Wunsch nach steiferen Papieren. Die Herstellung steifer Papiere war bisher nicht möglich, weil beim Einsatz von Latices mit harten Filmen eine deutliche Verschlechterung der Druckeigenschaften auftrat: ungleichmässige Porosität, verringerte Kompressibilität, schlechter Ausdruck (missing dots). Erfindungsgemäss modifizierte Latices mit hartem Film ermöglichen es, aufgrund der besonderen Strichstruktur unter Beibehaltung der für den Tiefdruck erforderlichen Eigenschaften erstmalig steife Papiere im Tiefdruckverfahren zu bedrucken.

Durch die gleichmässige Einlagerung des modifizierten Binders indie Strichmatrix kann aufgrund seines hohen Bindevermögens der Binderanteil in der Strichmasse reduziert werden, was letztlich zu einer weiteren Verbesserung der Bedruckbarkeitseigenschaften führt.

Die folgenden Beispiele erläutern die Erfindung. Prozentangaben und Teile beziehen sich stets auf das Gewicht, wenn nicht anders angegeben.

*Beispiel 1*

*Zusatz von teilverseiftem Polyvinylacetat zu unterschiedlichen Papierstreichlatices*

a) *Modifizierung der Latices*

Die weiter unten beschriebenen Latices unterschiedlicher Polymer-Zusammensetzung zur Herstellung von Papierstreichmassen werden mit Wasser auf einen für alle gleichen Feststoffgehalt von 45% eingestellt. Diesen Latices wird zur Modifizierung langsam, unter Rühren, eine 10%ige wässrige Lösung eines teilweise verseiften Polyvinylacetats zugegeben. Die Zugabemenge beträgt 5% (bezogen fest auf fest). Das teilweise verseifte Polyvinylacetat weist einen Hydrolysierungsgrad von 88 Mol-%, und ein Mol-Gew.-% von 25 000 auf.

Folgende Latex-Typen werden, wie oben beschrieben, erfindungsgemäss modifiziert:

*SBR-Latex, Typ 1*

Carboxylierter Styrol-Butadien-Latex mit üblicher Filmhärte und hohem Pigmentbindevermögen [handelsüblicher Papierstreichlatex (60% Styrol, 36% Butadien und 4% (Meth)acrylsäure)]

*In modifizierter Form = Latex A*

*SBR-Latex, Typ 2*

Carboxylierter Styrol-Butadien-Latex mit höherer Filmhärte aber vermindertem Pigmentbindevermögen

*In modifizierter Form = Latex B*

*Acrylat-Latex*

Styrol-Acrylsäurebutylester-Latex mit etwas höherer Filmhärte aber geringerem Pigmentbindevermögen wie SBR-Latex Typ 1 (handelsüblicher Papierstreichlatex)

*In modifizierter Form = Latex C*

Zur Ausbildung eines Anlagerungsgleichgewichts wurden die modifizierten Latices vor der Weiterverarbeitung 24 Stunden gelagert.

Als Vergleich wurden die beiden SBR-Latices (Typ 1 und Typ 2) und der Acrylat-Latex in nicht modifizierter Form mitgetestet.

Die Bindereigenschaften sind in Tabelle 1 aufgeführt.

*Tabelle 1*

*Eigenschaften der Latices*

| Latex | Feststoffgehalt % | pH-Wert | Viskosität (mPa.s) |
|---|---|---|---|
| A | 38,6 | 7,4 | 244 |
| B | 38,6 | 7,4 | 110 |
| C | 38,6 | 8,7 | 93 |
| Vergleich nicht modifiziert | | | |
| SBR-Typ 1 | 45 | 7,2 | 68 |
| SBR-Typ 2 | 45 | 6,8 | 72 |
| Acrylat | 45 | 8,5 | 62 |

Anm.:
Viskosität: Brookfield LVT. Spindel 3 bzw. 4, 60 Upm 20°C

b) *Herstellung der Papierstreichmasse und Durchführung des Streichversuchs*

In eine wässrige Lösung von 0,2 Teilen Natriumpolyacrylat, 0,2 Teilen Natriumpolyphosphat und 1 Teil Ammoniakwasser werden mit Hilfe eines Schnellrührers 100 Teile China Clay eingerührt und zu einer homogenen Suspension dispergiert. Als Bindemittel werden jeweils 10% (fest auf fest, bezogen auf Clay) der unter a) beschriebenen Latices zugegeben. Mit Ammoniakwasser wird auf pH 8,5 eingestellt. Die jeweilige Zusammensetzung ist aus Tabelle 2 ersichtlich.

*Tabelle 2*

*Zusammensetzung der Papierstreichmassen*
(Anteile sind jeweils Gewichtsteile)

| Versuch | 1 | 2 | 3 | 4 | 5 | 6 |
|---|---|---|---|---|---|---|
| Wasser | ⊢————————74,0————————⊣ | | | | | |
| Natriumpolyacrylat | ⊢————————0,2————————⊣ | | | | | |
| Natriumpolyphosphat | ⊢————————0,2————————⊣ | | | | | |
| China Clay Dinkie A | ⊢————————100————————⊣ | | | | | |
| Modifizierter Latex (38,6%) | | | | | | |
|   A | 27,2 | — | — | — | — | — |
|   B | — | 27,2 | — | — | — | — |
|   C | — | — | 27,2 | — | — | — |
| Vergleich (nicht modifizierter Latex) | | | | | | |
|   SBR-Latex, Typ 1 | — | — | — | 27,2* | — | — |
|   SBR-Latex, Typ 2 | — | — | — | — | 27,2* | — |
|   Acrylat Latex | — | — | — | — | — | 27,2* |
| pH-Wert | ⊢————————8,5————————⊣ | | | | | |
| Feststoffgehalt (%) | ⊢————————55————————⊣ | | | | | |

\* 22,2 Teile 45%iger Latex + 5,0 Teile Wasser

Die Eigenschaften der Streichmassen sind in Tabelle 3 aufgeführt.

Nach Beruhigung und Entlüftung werden die so hergestellten Streichmassen mit Hilfe einer Schaber-Versuchsstreichmaschine, bei einer Geschwindigkeit von 200 m/Min., auf ein holzhaltiges, gebleichtes Rohpapier aus 55% Holzschliff und 45% gebleichtem Sulfitzellstoff (Nadelholz), einem Aschegehalt von 9,9% und einem Flächengewicht von 50 g/m², beidseitig mit einem Auftragsgewicht von 8 bis 10 g/m² je Seite (trocken) aufgestrichen.

Auch nach längerer Laufzeit bildet sich bei den Streichmassen mit modifiziertem Latex kein Koagulat oder Belag, weder am Schaber noch auf der Gegenwalze. Ebenso ist kein Durchschlagen der Streichmasse auf die Gegenwalze festzustellen. Die gestrichenen Papiere werden anschliessend über einem Superkalander (2 Durchgänge) satiniert und nach Klimatisierung bei 20°C und 65% relativer Luftfeuchtigkeit geprüft.

Die Prüfergebnisse sind in Tabelle 4 zusammengestellt.

*Tabelle 3*

*Eigenschaften der Papierstreichmassen*

| Versuch | 1 | 2 | 3 | 4 | 5 | 6 |
|---|---|---|---|---|---|---|
| Feststoffgehalt (%) | 54,9 | 55,1 | 54,8 | 54,8 | 54,9 | 54,9 |
| pH-Wert | 8,4 | 8,5 | 8,4 | 8,6 | 8,6 | 8,5 |
| Viskosität (mPa.s) | | | | | | |
| Brookfield, sofort | 594 | 670 | 390 | 175 | 182 | 195 |
| Brookfield, n. 24 Std. | 724 | 960 | 435 | 780 | 720 | 680 |
| Rheomat | | | | | | |
| bei D = $3,5 \cdot 10^1$ | 345 | 320 | 410 | 140 | 145 | 190 |
| bei D = $1 \cdot 10^3$ | 45 | 38 | 54 | 27 | 31 | 33 |
| Stockpunkt (%) | 73,4 | 73,1 | 74,1 | 76,8 | 77,3 | 77,1 |
| Wasserrückhaltevermögen (Vergleich zum nicht modifizierten Latex) | leicht verbessert | stärker verbessert | leicht verbessert | | | |

Anm.:
Beschreibung der Prüfverfahren siehe Beispiel 1, Teil d).

*Tabelle 4*

*Stricheigenschaften*

| Versuch | 1 | 2 | 3 | 4 | 5 | 6 |
|---|---|---|---|---|---|---|
| Strichauftrag (g/m² je Seite) | | | 10 | | | |
| Dicke (mm) | 0,074 | 0,079 | 0,078 | 0,070 | 0,070 | 0,069 |
| Wasseraufnahme (g/m²) nach Cobb (60 Sek.) | 21,5 | 22 | 23 | 20,0 | 21 | 20,5 |
| Glätte n. Bekk. (Sek./ml) | 510 | 660 | 640 | 350 | 310 | 320 |
| Rauhigkeit n. Bendtsen (ml/Min.) | 25 | 21 | 22 | 39 | 36 | 35 |
| Biegesteifigkeit n. Schlenker, 40 | 40 | 62 | 42 | 42 | 61 | 47 |
| IGT-Rupffestigkeit (cm/Sek.) | 94 | 76 | 62 | 116 | 80 | 88 |
| K u. N-Wischtest (%) | 20,5 | 30 | 29 | 18 | 24 | 24 |
| Tiefdruck-Probedruck | 1 | 1 | 2 | 3 | 3 | 3 |
| Mikrokonturtest | 2 | 1 | 2 | 4 | 4 | 4 |
| Glanz (%) | 28 | 32 | 26 | 22 | 24 | 23 |
| Opazität (%) | 93,9 | 93,0 | 92,6 | 91,6 | 91,4 | 91,1 |
| Weissgrad (%) | 82,3 | 82,4 | 82,2 | 81,4 | 81,4 | 81,6 |
| Faserabdeckung (%) | 79,4 | 77,6 | 78,0 | 69,2 | 69,1 | 69,7 |

Anm.:
Beschreibung der Prüfverfahren siehe Beispiel 1, Teil d).

c) *Auswertung*

Die gestrichenen Papiere von Versuch 1 - 3, deren Streichmasse die erfindungsgemäss modifizierten Latices enthielten, zeigen gegenüber den mit üblichen Latices gestrichenen Papieren (Versuch 4 - 6) deutlich verbesserte Bedruckbarkeits-Eigenschaften, Strichglätte, Opazität und vor allem eine hohe Faserabdeckung. Ebenso wurde der Glanz gesteigert. Der Stockpunkt dieser Streichmassen wurde herabgesetzt, so dass eine frühzeitige Strich-Immobilisierung vor der eigentlichen Trocknung möglich wird und die Bindemittel-Wanderung unterdrückt werden kann.

Erstaunlich ist, dass auch ein Strich, der einen vergleichsweise harten Binder enthält (Versuch 2), sehr gute Bedruckbarkeit für den Tiefdruck besitzt. Auf diese Weise erhält man ein Papier mit geringem Flächengewicht, aber hoher Bogensteifigkeit, das sich für den Tiefdruck eignet.

d) *Prüfmethoden*

Folgende Prüfmethoden wurden angewandt:
(Prüfklima, soweit nicht anders angegeben: 20°C, 65% rel. Luftfeuchte)

*pH-Wert:*
elektrometrisch nach DIN 53 785
*Feststoffgehalt:*
  a) für Latices: nach DIN 53 189
  b) für Streichmassen: Differenz-Wägung nach Trocknung bei 110°C
*Viskosität:*
nach DIN 53 788
  a) Messgerät: Brookfield-Viskosimeter LVT, Spindel 3 bzw. 4, 60 UpM Prüftemperatur: 20°C
  b) Messgerät zur Aufnahme von Rheogramm: Rheomat 15, Messsysteme A - C, Prüftemperatur: 20°C
*Stockpunkt der Streichmassen:*
100 g der Streichmasse werden auf einen unglasierten, unter konstanten Bedingungen getrockneten Tonteller ausgegossen. Sobald der Feuchtigkeitsspiegel von der Oberfläche der Streichmasse verschwunden ist, wird eine Probe zur Bestimmung des Feststoffgehalts entnommen.
Der so ermittelte Feststoffgehalt in % bezeichnet den Stockpunkt.

*Wasserrückhaltevermögen:*
10 cm³ der Streichmasse werden mit einem kleinen Rakel, Schlitzhöhe 0,2 mm, innerhalb von wenigen Zentel-Sekunden — konstante Streichgeschwindigkeit — über eine Probelfäche des zu bestreichenden Papiers gestrichen. Durch das in das Papier eindringende Wasser aus der Streichmasse steigt die relative Luftfeuchtigkeit auf der Papierunterseite an. Dieser Feuchteanstieg in Abhängigkeit von der Zeit wird mit einem hygroskopischen Feuchtefühler kontinuierlich registriert. Je stärker der Feuchteanstieg pro Zeit ist, desto schlechter ist das Wasserrückhaltevermögen der Streichmasse.
Feuchtefühler: VAISALA (Ausrüstung HM 11)
Messung im Klimaraum (65% rel. Luftfeuchte).

*Auftragsgewicht:*
Flächengewichts-Differenz zwischen klimatisierten Proben von gestrichenem und ungestrichenem Papier (nach DIN 53 111)

*Dicke:*

Bestimmung nach DIN 53 105

*Wasseraufnahme nach Cobb:*

Bestimmung nach DIN 53 132, 60 Sek.

*Glätte nach Bekk:*

Bestimmung nach DIN 53 107

*Rauhigkeit nach Bendtsen:*

Bestimmung nach DIN 53 108

*Biegesteifigkeit nach Schlenker:*

Bestimmung nach DIN 53 121, Biegewinkel 40°.

*Rupffestigkeit:*

Bestimmung nach Tappi-Standard T 499 Su 64 mit mit IGT-Gerät, Typ AC2, und einer Druckspannung von 35 kg/cm². Als Rupffarbe dient die IGT-Rupftestfarbe niedriger Viskosität.

*K + N-Test:* (Druckfarbenaufnahme)

Ermittlung der Farbaufnahme gestrichener Papiere üblicherweise nach Tappi-Routine Control Method RC 19, Einwirkungszeit: 3 Min. Der K + N-Wert ist die Differenz des Weissgrades zwischen unbehandeltem und mit Testfarbe behandeltem Papier. Messgerät: Elrepho, Filter R 457 ·

Testfarbe: K + N-Testing Ink, der K + N-Laboratories Inc., Melrose Park

*Mikrokonturtest:*

Prüfverfahren zur Beurteilung der Strichgleichmässigkeit. Durchführung ähnlich K + N-Wischtest, Einwirkungszeit jedoch nur 2 Min., Testfarbe: blaue Testfarbe 3811 der Firma Lorilleux Druckfarben GmbH, Ratingen. Die Beurteilung erfolgt visuell anhand einer fünfstufigen Bewertungsscala, von Note 1 für eine absolut homogene, stippen-, loch- und schleierfreie Testfläche bis Note 5 für eine stark unruhige, ungleichmässige, fehlstellenreiche Testfläche.

*Drucktest:*

Tiefdruck-Probedruck auf Probedruckmaschine System Dr. Dürner. Das Druckergebnis wurde visuell geprüft und nach Schärfe der Rasterwiedergabe, Gleichmässigkeit der Farbaufnahme, Geschlossenheit des Ausdruckes, Durchscheinen und dergleichen bewertet. Dazu wurden 3 Klassen festgelegt:

1 = sehr gut,
2 = gut,
3 = schlecht

*Glanz:*

Ermittlung des Glanzes nach DIN 67 530 gegen Vergleichsstandard bei einem Messwinkel von 60°, Messgerät: Lange Reflektometer

*Opazität:*

Bestimmung nach DIN 53 146

*Weissgrad:*

Messung mit Remissionsphotometer Elrepho, Filter R 457

*Faserabdeckung:*

Die Streichfarbe wird auf einem schwarzen Karton aufgestrichen (Auftragsgewicht: 8 - 10 g/m² trocken) und vorsichtig getrocknet. Anschliessend wird der Weissgrad (Elrepho, Filter R 457) der gestrichenen Kartonseite gemessen. Er ist um so höher, je stärker der Strich den schwarzen Untergrund abdeckt.

Eine weitere Beurteilung der Faserabdeckung besteht in folgender Methode:

Man fährt die bestrichene Kartonoberfläche mit einem sehr eng gebündelten Strahl eines Spektralphotometers ab und registriert die Remission kontinuierlich über eine Länge des Kartons von etwa 10 cm hinweg. Die dabei auftretenden Remissionsschwankungen ergeben nach stochastischer Auswertung ein Mass für die Gleichmässigkeit der Faserabdeckung. Querschnitt des Beleuchtungsstrahls 0,3 × 2 mm², Rechteckblende.

*Beispiel 2*

*Zusatz unterschiedlicher Co-Binder zu einem Papierstreichlatex*

a) *Modifizierung des Latex*

Wie bei Beispiel 1 unter a) beschrieben, werden dem SBR-Latex, Typ 1, jeweils 5% (bezogen fest auf fest) folgender Co-Binder in Form 10%iger wässriger Lösungen zugesetzt:

— Blockmischpolymerisat aus hydrophilen Polyoxyethylengruppen (Anteil etwa 80 Mol-%) und hydrophoben Polyoxypropylengruppen, Gesamt-Mol-Gewicht: ca. 16 000 Kennzeichnung: PEO-PPO, ergibt Latex D

— Polyvinylpyrrolidon mit einem Mol-Gewicht von ca. 40 000 Kennzeichnung: PVP, ergibt Latex E

— Polyacrylamid mit einem Mol-Gewicht von 30 000 - 40 000 Kennzeichnung: PAA, ergibt Latex F

— als Vergleich Teilverseiftes Polyvinylacetat wie in Beispiel 1 beschrieben

Kennzeichnung: PVAC tl. verseift, ergibt Latex A pH-Wert und Viskosität der modifizierten Latices sind in Tabelle 5 aufgeführt.

*Tabelle 5*

*Eigenschaften der Latices*

| Latex | modifiziert mit | pH-Wert | Viskosität. (mPa.s) |
|-------|-----------------|---------|---------------------|
| D | PEO-PPO | 7,5 | 130 |
| E | PVP | 7,4 | 52 |
| F | PAA | 4,0 | 25 |
| A | PVAC teilverseift | 7,4 | 244 |

Feststoffgehalt: 38,6%

Anm.:

Viskosität: Brookfield LVT, Spindel 3 bzw. 4, 60 UpM 20°C

b) *Herstellung der Papierstreichmasse und Durchführung des Streichversuches*

Erfolgt unter den gleichen Bedingungen wie bei Beispiel 1 unter b) beschrieben. Die Zusammensetzungen sind in Tabelle 6, die Eigenschaften der Streichmassen in Tabelle 7 beschrieben.

Auch bei diesen Versuchen trat, auch nach längerer Laufzeit, kein Koagulat oder Belag am Schaber auf.

Zum Vergleich wurde zusätzlich Versuch 11 entsprechend Versuch 4 von Beispiel 1 durchgeführt, wobei der entsprechende Anteil an teilverseiftem Polyvinylacetat nachträglich zur fertigen Streichfarbe zugegeben wurde.

Die beidseitig gestrichenen Papiere wurden anschliessend über einem Superkalander satiniert und nach Klimatisierung geprüft. Die Stricheigenschaften sind in Tabelle 8 zusammengestellt.

*Tabelle 6*
*Zusammensetzung der Papierstreichmassen*
(Anteile sind jeweils Gewichtsanteile)

| Versuch | 7 | 8 | 9 | 10 | 11 |
|---|---|---|---|---|---|
| Wasser | | | 74,0 | | |
| Natriumpolyacrylat | | | 0,2 | | |
| Natriumpolyphosphat | | | 0,2 | | |
| China Clay | | | 100 | | |
| Modifizierter Latex (38,6%) | | | | | |
| D | 27,2 | — | — | — | — |
| E | — | 27,2 | — | — | — |
| F | — | — | 27,2 | — | — |
| A | — | — | — | 27,2 | — |
| Vergleichsslatex n. modifiziert | — | — | — | — | 22,2 |
| Polyvinylacetat teilverseift (10%) | — | — | — | — | 5,0 |
| pH-Wert | | | 8,5 | | |
| Feststoffgehalt (%) | | | 55 | | |

*Tabelle 7*

*Eigenschaften der Papierstreichmassen*

| Versuch | 7 | 8 | 9 | 10 | 11 |
|---|---|---|---|---|---|
| Feststoffgehalt (%) | 55,3 | 55,2 | 55,5 | 54,9 | 54,8 |
| pH-Wert | 8,4 | 8,6 | 8,3 | 8,4 | 8,5 |
| Viskosität (mPa.s) | | | | | |
| Brookfield, sofort | 820 | 1150 | 325 | 594 | 286 |
| Brookfield n. 24 Std. | 960 | 1200 | 495 | 724 | 980 |
| Rheomat | | | | | |
| bei $D = 3,5 \cdot 10^1$ | 472 | 624 | 180 | 345 | 265 |
| bei $D = 1 \cdot 10^3$ | 37 | 44 | 27 | 45 | 38 |
| Stockpunkt (%) | 72,9 | 73,0 | 74,0 | 73,4 | 76,1 |
| Wasserrückhaltevermögen (Vergleich zum nicht modifizierten Latex) | stärker verb. | leicht verb. | nicht verb. | leicht verb. | leicht verb. |

Anm.:
Beschreibung der Prüfverfahren siehe Beispiel 1, Teil d).

*Tabelle 8*

*Stricheigenschaften*

| Versuch | 7 | 8 | 9 | 10 | 11 |
|---|---|---|---|---|---|
| Strichaùftrag (g/m² je Seite) | | | 10 | | |
| Dicke (mm) | 0,76 | 0,74 | 0,73 | 0,074 | 0,070 |
| Wasseraufnahme (g/m²) nach Cobb (60 Sek.) | 26,5 | 21,5 | 22 | 21,5 | 21 |
| Glätte n. Bekk. (Sek./ml) | 540 | 750 | 680 | 510 | 360 |
| Rauhigkeit nach Bendtsen (ml/Min.) | 24 | 19 | 20 | 25 | 33 |
| Biegesteifigkeit nach Schlenker, 40°C | 39 | 41 | 40 | 40 | 39 |
| IGT-Rupffestigkeit (cm/Sek.) | 88 | 89 | 120 | 94 | 110 |
| K. u. N-Wischtest (%) | 22,7 | 24,0 | 19,4 | 20,5 | 18,5 |
| Tiefdruck-Probedruck | 2 | 2 | 1 | 1 | 3 |
| Mikrokonturtest | 1 | 1 | 1 | 2 | 4 |
| Glanz (%) | 25 | 24 | 26 | 28 | 22 |
| Opazität (%) | 92,8 | 92,4 | 93,0 | 93,9 | 91,6 |
| Weissgrad (%) | 82,4 | 82,3 | 82,3 | 82,3 | 81,3 |
| Faserabdeckung (%) | 76,9 | 77,9 | 77,7 | 79,4 | 69,3 |

Anm.:
Beschreibung der Prüfverfahren siehe Beispiel 1, Teil d).

c) *Auswertung*

Wie die Versuche 7 - 10 zeigen, führt die Modifizierung des Latex durch Co-Binder gemäss vorliegender Erfindung zur Verbesserung der Stricheigenschaften und somit zu sehr guten drucktechnischen Eigenschaften, vor allem beim Tiefdruck.

Versuch 11 dagegen zeigt, dass eine nachträgliche Zugabe des Co-Binders zur Streichfarbe nicht die gewünschte Verbesserung bewirkt.

**Patentansprüche für die Vertragsstaaten:**
BE, CH, DE, FR, GB, IT, LI, NL, SE

1. Wässrige pigmenthaltige Dispersionen mit einem Feststoffgehalt von 35 - 65 Gew.-% von

a) als Binder dienenden, gegebenenfalls hydrophile Gruppen enthaltenden, Polymerisaten A, die 70 bis 100 Gew.-% einpolymerisierte Einheiten von Styrol/Butadien, Butadien/Acrylnitril, Ethylen/Vinylchlorid, Styrol/(Meth)acrylsäureester, Vinylacetat/Ethylen oder Vinylacetat/Vinylchlorid, 0 - 15 Gew.-% weitere Monomere und 0 - 15 Gew.-% ungesättigte Carbonsäuren, deren Amide und/oder andere hydrophile Monomere mit Sulfonsäure-, Amino- oder Hydroxylgruppen enthalten, und

b) als Co-Binder dienenden wasserlöslichen Polymerisaten B, dadurch gekennzeichnet, dass die wasserlöslichen Polymerisate B

1) aus Poly(meth)acrylamid, Polyvinylpyrrolidon, und /oder Copolymeren aus Vinylalkohol/Vinylacetat, Vinylpyrrolidon/Vinylacetat, (Meth)acrylamid/Styrol oder Ethylenoxid/Propylenoxid mit Molgewicht von 1000 bis 1 000 000 bestehen,

2) Polymerisat B in einer Menge von 0,5 - 50 Gew.-%, bezogen auf Polymerisat A, mit diesem gemischt wird, wobei

3) das Polymerisat B teilweise oder vollständig an das Polymerisat A gebunden wird und die Menge an gebundenem Polymerisat B mindestens 0,5 Gew.-% des Polymerisats A beträgt,

4) das nicht gebundene Polymerisat B 2 Gew.-% der Pigmentmasse nicht überschreitet und

5) Polymerisat B vor der Abmischung von Binder und Pigment zum Latex aus dem Polymerisat A zugegeben wird.

2. Wässrige Dispersionen nach Anspruch 1, dadurch gekennzeichnet, dass das wasserlösliche Polymerisat B ein Molgewicht von 5000 bis 200 000 aufweist.

3. Wässrige Dispersionen nach Anspruch 1, dadurch gekennzeichnet, dass das Polymerisat A ein Mischpolymerisat aus 30 - 75 Gew.-% Styrol, 17 bis 69 Gew.-% Butadien und 1 - 8 Gew.-% einer oder mehrerer ungesättigter Carbonsäuren ist.

4. Wässrige Dispersionen nach Anspruch 1, dadurch gekennzeichnet, dass das Polymerisat A ein Mischpolymerisat aus 30 - 75 Gew.-% Styrol, 17 bis 69 Gew.-% eines $C_{1-12}$-Alkylesters der (Meth)-acrylsäure und 1 - 8 Gew.-% einer oder mehrerer ungesättigter Carbonsäuren ist.

5. Wässrige Dispersionen nach Anspruch 1, dadurch gekennzeichnet, dass das Polymerisat A ein Mischpolymerisat aus 30 - 75 Gew.-% Styrol, 17 bis 69 Gew.-% Butadien und 1 - 8 Gew.-% ungesättigter Säureamide ist.

6. Verwendung der wässrigen Dispersionen nach Ansprüchen 1 - 5 als Bindemittel zur Herstellung von Überzugsmassen für Druckträger.

**Patentansprüche für den Vertragsstaat: AT**

1. Verfahren zur Herstellung von wässrigen pigmenthaltigen Dispersionen mit einem Feststoffgehalt von 35 - 65 Gew.-% von
a) als Binder dienenden, gegebenenfalls hydrophile Gruppen enthaltenden, Polymerisaten A, die 70 bis 100 Gew.-% einpolymerisierte Einheiten von Styrol/Butadien, Butadien/Acrylnitril, Ethylen/Vinylchlorid, Styrol/(Meth)acrylsäureester, Vinylacetat/Ethylen oder Vinylacetat/Vinylchlorid, 0 - 15 Gew.-% weitere Monomere und 0 - 15 Gew.-% ungesättigte Carbonsäuren, deren Amide und/oder andere hydrophile Monomere mit Sulfonsäure-, Amino- oder Hydroxylgruppen enthalten, und
b) als Co-Binder dienenden wasserlöslichen Polymerisaten B, dadurch gekennzeichnet, dass die wasserlöslichen Polymerisate B
   1) aus Poly(meth)acrylamid, Polyvinylpyrrolidon, und /oder Copolymeren aus Vinylalkohol/Vinylacetat, Vinylpyrrolidon/Vinylacetat, (Meth)acrylamid/Styrol oder Ethylenoxid/Propylenoxid mit Molgewicht von 1000 bis 1 000 000 bestehen,
   2) Polymerisat B in einer Menge von 0,5 - 50 Gew.-%, bezogen auf Polymerisat A, mit diesem gemischt wird, wobei
   3) das Polymerisat B teilweise oder vollständig an das Polymerisat A gebunden wird und die Menge an gebundenem Polymerisat B mindestens 0,5 Gew.-% des Polymerisats A beträgt,
   4) das nicht gebundene Polymerisat B 2 Gew.-% der Pigmentmasse nicht überschreitet und
   5) Polymerisat B vor der Abmischung von Binder und Pigment zum Latex aus dem Polymerisat A zugegeben wird.

2. Verfahren nach Anspruch 1, dadurch gekennzeichnet, dass das wasserlösliche Polymerisat B ein Molgewicht von 5000 bis 200 000 aufweist.

3. Verfahren nach Anspruch 1, dadurch gekennzeichnet, dass das Polymerisat A ein Mischpolymerisat aus 30 - 75 Gew.-% Styrol, 17 - 69 Gew.-% Butadien und 1 - 8 Gew.-% einer oder mehrerer ungesättigter Carbonsäuren ist.

4. Verfahren nach Anspruch 1, dadurch gekennzeichnet, dass das Polymerisat A ein Mischpolymerisat aus 30 - 75 Gew.-% Styrol, 17 - 69 Gew.-% eines $C_{1-12}$-Alkylesters der (Meth)-acrylsäure und 1 - 8 Gew.-% einer oder mehrerer ungesättigter Carbonsäuren ist.

5. Verfahren nach Anspruch 1, dadurch gekennzeichnet, dass das Polymerisat A ein Mischpolymerisat aus 30 - 75 Gew.-% Styrol, 17 - 69 Gew.-% Butadien und 1 - 8 Gew.-% ungesättigter Säureamide ist.

6. Verwendung der wässrigen, nach Ansprüchen 1 - 5 hergestellten Dispersionen als Bindemittel zur Herstellung von Überzugsmassen für Druckträger.

**Claims for the Contracting States:**
BE, CH, DE, FR, GB, IT, LI, NL, SE

1. Aqueous pigment-containing dispersions having a solids content of 35 - 65 % by weight of
a) polymers A, used as a binder, and optionally containing hydrophilic groups, which contain incorporated therein 70 - 100% by weight of polymerised units of styrene/butadiene, butadiene/acrylonitrile, ethylene/vinyl chloride, styrene/(meth)acrylic acid ester, vinyl acetate/ethylene or vinyl acetate/vinyl chloride, 0 - 15% by weight of other monomers and 0 - 15% by weight of unsaturated carboxylic acids, the amides thereof and/or other hydrophilic monomers containing sulphonic acid, amino or hydroxyl groups, and
b) water-soluble polymers B, used as co-binder, characterised in that the water-soluble polymers B
   1) consist of poly(meth)acrylamide, polyvinyl pyrrolidone, and/or copolymers of vinyl alcohol/vinyl acetate, vinyl pyrrolidone/vinyl acetate, (meth)acrylamide/styrene or ethylene oxide/propylene oxide having molecular weights of 1,000 to 1,000,000,
   2) polymer B is mixed in a quantity of 0.5 - 50% by weight, based on polymer A, with the latter,
   3) polymer B being partially or completely bonded to polymer A and the quantity of bonded polymer B amounting to at least 0.5% by weight of polymer A,
   4) the non-bonded polymer B not exceeding 2% by weight of the pigment composition and
   5) polymer B being added to the latex of polymer A before the binder and the pigment are mixed.

2. Aqueous dispersions according to Claim 1, characterised in that the water-soluble polymer B has a molecular weight of 5,000 to 200,000.

3. Aqueous dispersions according to Claim 1, characterised in that polymer A is a copolymer of 30 to 75% by weight of styrene, 17 - 69% by weight of butadiene and 1 - 8% by weight of one or more unsaturated carboxylic acids.

4. Aqueous dispersions according to Claim 1, characterised in that polymer A is a copolymer of 30 to 75% by weight of styrene, 17 - 69% by weight of a $C_{1-12}$-alkyl ester of (meth)acrylic acid and 1 - 8% by weight of one or more unsaturated carboxylic acids.

5. Aqueous dispersions according to Claim 1, characterised in that polymer A is a copolymer of 30 to 75% by weight of styrene, 17 - 69% by weight of butadiene and 1 - 8% by weight of unsaturated acid amides.

6. Use of the aqueous dispersions according to Claims 1 - 5 as binding agents for the production of coating compositions for print carriers.

**Claims for the Contracting State: AT**

1. Process for the production of aqueous pigment-containing dispersions having a solids content of 35 - 65% by weight of

a) polymers A, used as a binder, and optionally containing hydrophilic groups, which contain incorporated therein 70 - 100% by weight of polymerised units of styrene/butadiene, butadiene/acrylonitrile, ethylene/vinyl chloride, styrene/(meth)-acrylic acid ester, vinyl acetate/ethylene or vinyl acetate/vinyl chloride, 0 - 15% by weight of other monomers and 0 - 15% by weight of unsaturated carbocylic acids, the amides thereof and/or other hydrophilic monomers containing sulphonic acid, amino or hydroxyl groups, and

b) water-soluble polymers B, used as co-binder, characterised in that the water-soluble polymers B

1) consist of poly(meth)acrylamide, polyvinyl pyrrolidone, and/or copolymers of vinyl alcohol/vinyl acetate, vinyl pyrrolidone/vinyl acetate, (meth)acrylamide/styrene or ethylene oxide/propylene oxide having molecular weights of 1,000 to 1,000,000,

2) polymer B is mixed in a quantity of 0.5 - 50% by weight, based on polymer A, with the latter,

3) polymer B being partially or completely bonded to polymer A and the quantity of bonded polymer B amounting to at least 0.5% by weight of polymer A,

4) the non-bonded polymer B not exceeding 2% by weight of the pigment composition and

5) polymer B being added to the latex of polymer A before the binder and the pigment are mixed.

2. Process according to Claim 1, characterised in that the watersoluble polymer B has a molecular weight of 5,000 to 200,000.

3. Process according to Claim 1, characterised in that polymer A is a copolymer of 30 - 75% by weight of styrene, 17 - 69% by weight of butadiene and 1 to 8% by weight of one or more unsaturated carboxylic acids.

4. Process according to Claim 1, characterised in that polymer A is a copolymer of 30 - 75% by weight of styrene, 17 - 69% by weight of a $C_{1-12}$-alkyl ester of (meth)acrylic acid and 1 - 8% by weight of one or more unsaturated carboxylic acids.

5. Process according to Claim 1, characterised in that polymer A is a copolymer of 30 - 75% by weight of styrene, 17 - 69% by weight of butadiene and 1 to 8% by weight of unsaturated acid amides.

6. Use of the aqueous dispersions produced according to Claims 1 - 5 as binding agents for the production of coating compositions for print carriers.

**Revendications pour les Etats Contractants:**
BE, CH, DE, FR, GB, LI, NL, SE

1. Dispersions aqueuses contenant des pigments et ayant une teneur en matières solides comprise entre 35 et 65% en poids, ces dispersions comprenant:

a) des polymères A faisant office d'agents liants, contenant éventuellement des groupes hydrophiles et comprenant 70 à 100% en poids de motifs polymérisés de styrène/butadiène, de butadiène/acrylonitrile, d'éthylène/chlorure de vinyle, de styrène/ester d'acide (méth)acrylique, d'acétate de vinyle/éthylène ou d'acétate de vinyle/chlorure de vinyle, 0 - 15% en poids d'autres monomères et 0 - 15% en poids d'acides carboxyliques insaturés, de leurs amides et/ou d'autres monomères hydrophiles comportant des groupes acide sulfonique, amino ou hydroxy, et

b) des polymères B hydrosolubles faisant office de co-liants, caractérisées en ce que:

1) les polymères B hydrosolubles sont constitués de poly(méth)acrylamide, de polyvinylpyrrolidone et/ou de copolymères d'alcool vinylique/acétate de vinyle, de vinylpyrrolidone/acétate de vinyle, de (méth)acrylamide/styrène ou d'oxyde d'éthylène/oxyde de propylène ayant des poids moléculaires de 1000 à 1 000 000,

2) on mélange le polymère B (en une quantité de 0,5 à 50% en poids, calculé sur le polymère A) avec le polymère A,

3) le polymère B étant lié partiellement ou complètement au polymère A, tandis que la quantité de polymère B lié représente au moins 0,5% en poids du polymère A,

4) la quantité de polymère B non lié ne dépasse pas 2% en poids de la masse pigmentaire et

5) avant de mélanger le liant et le pigment, on ajoute le polymère B au latex du polymère A.

2. Dispersions aqueuses suivant la revendication 1, caractérisées en ce que le polymère hydrosoluble B a un poids moléculaire de 5000 à 200 000.

3. Dispersions aqueuses suivant la revendication 1, caractérisées en ce que le polymère A est un copolymère constitué de 30 - 75% en poids de styrène, de 17 - 69% en poids de butadiène et de 1 - 8% en poids d'un ou de plusieurs acides carboxyliques insaturés.

4. Dispersions aqueuses suivant la revendication 1, caractérisées en ce que le polymère A est un copolymère de 30 - 75% en poids de styrène, de 17 - 69% en poids d'un ester alkylique en $C_{1-12}$ de l'acide (méth)acrylique et de 1 - 8% en poids d'un ou plusieurs acides carboxyliques insaturés.

5. Dispersions aqueuses suivant la revendication 1, caractérisées en ce que le polymère A est un copolymère de 30 - 75% en poids de styrène, de 17 - 69% en poids de butadiene et de 1 - 8% en poids d'un amide d'acide insaturé.

6. Utilisation des dispersions aqueuses suivant les revendications 1 à 5 comme agents liants pour la préparation de matières de revêtement pour supports d'impression.

**Revendications pour l'Etat Contractant: AT**

1. Procédé de préparation de dispersions aqueuses contenant des pigments et ayant une teneur en matières solides de 35 - 65% en poids, ces dispersions comprenant:

a) des polymères A faisant office d'agents liants, contenant éventuellement des groupes hydrophiles et comprenant 70 à 100% en poids de motifs polymérisés de styrène/butadiène, de buta-diène/acrylonitrile, d'éthylène/chlorure de vinyle, de styrène/ester d'acide (méth)acrylique, d'acétate de vinyle/éthylène ou d'acétate de vi-nyle/chlorure de vinyle, 0 - 15% en poids d'autres monomères et 0 - 15% en poids d'acides carboxyliques insaturés, de leurs amides et/ou d'autres monomères hydrophiles comportant des groupes acide sulfonique, amino ou hydroxy, et

b) des polymères B hydrosolubles faisant office de co-liants, caractérisé en ce que:

1) les polymères B hydrosolubles sont constitués de poly(méth)acrylamide, de polyvinyl-pyrrolidone et/ou de copolymères d'alcool vi-nylique/acétate de vinyle, de vinylpyrrolido-ne/acétate de vinyle, de (méth)acrylamide/styrène ou d'oxyde d'éthylène/oxyde de propylène ayant des poids moléculaires de 1000 à 1 000 000,

2) on mélange le polymère B (en une quantité de 0,5 à 50% en poids, calculé sur le polymère A) avec le polymère A,

3) le polymère B étant lié partiellement ou complètement au polymère A, tandis que la quantité de polymère B lié représente au moins 0,5% en poids du polymère A,

4) la quantité de polymère B non lié ne dépasse pas 2% en poids de la masse pigmentaire et

5) avant de mélanger le liant et le pigment, on ajoute le polymère B au latex du polymère A.

2. Procédé suivant la revendication 1, caractérisé en ce que le polymère hydrosoluble B a un poids moléculaire de 5000 à 200 000.

3. Procédé suivant la revendication 1, caractérisé en ce que le polymère A est un copolymère de 30 à 75% en poids de styrène, de 17 - 69% en poids de butadiène et de 1 - 8% en poids d'un ou plusieurs acides carboxyliques insaturés.

4. Procédé suivant la revendication 1, caractérisé en ce que le polymère A est un copolymère de 30 à 75% en poids de styrène, de 17 - 69% en poids d'un ester alkylique en $C_{1-12}$ de l'acide (méth)acrylique et de 1 - 8% en poids d'un ou plusieurs acides carboxyliques insaturés.

5. Procédé suivant la revendication 1, caractérisé en ce que le polymère A est un copolymère de 30 à 75% en poids de styrène, de 17 - 69% en poids de butadiène et de 1 - 8% en poids d'un amide d'acide insaturé.

6. Utilisation des dispersions aqueuses préparées suivant les revendications 1 - 5 comme agents liants pour la préparation de matières de revêtement pour supports d'impression.